# FASCICULE DE BREVET EUROPEEN

(11) **EP 2 331 651 B1**
(45) Date de publication et mention de la délivrance du brevet: **21.02.2018**
(21) Numéro de dépôt: 09759757.9
(22) Date de dépôt: 24.09.2009
(51) Int. Cl.: C09K 3/30, C09K 5/04

(54) **FLUIDE DE TRANSFERT DE CHALEUR**
WÄRMETRÄGERFLÜSSIGKEIT
HEAT TRANSFER FLUID

(30) Priorité: 08.10.2008 FR 0856817; 09.10.2008 FR 0856836
(43) Date de publication de la demande: 15.06.2011
(60) Demande divisionnaire: 13152355.7
(73) Titulaire: Arkema France, 92700 Colombes (FR)
(72) Inventeur: RACHED, Wissam, F-69630 CHAPONOST (FR)
(74) Mandataire: Dang, Doris
(86) Numéro de dépôt international: PCT/FR2009/051814
(87) Numéro de publication internationale: WO 2010/040928

(56) Documents cités:
- EP-A2- 2 149 592
- WO-A-2006/094303
- WO-A-2007/126414
- WO-A2-2010/000994

## Description

La présente invention concerne des compositions renfermant des hydrofluorooléfines et leurs utilisations comme fluides de transfert de chaleur, agents d'expansion, solvants et aérosols.

Les problèmes posés par les substances appauvrissant la couche d'ozone atmosphérique (ODP : ozone depletion potential) ont été traités à Montréal où a été signé le protocole imposant une réduction de la production et de l'utilisation des chlorofluorocarbures (CFC). Ce protocole a fait l'objet d'amendements qui ont imposé l'abandon des CFC et étendu la réglementation à d'autres produits, dont les hydrochlorofluorocarbones (HCFC).

L'industrie de la réfrigération et de la production d'air conditionné a beaucoup investi dans la substitution de ces fluides frigorigènes et c'est ainsi que les hydrofluorocarbures (HFC) ont été commercialisés.

Les (hydro)chlorofluorocarbures utilisés comme agents d'expansion ou solvants ont également été substitués par des HFC.

Dans l'industrie automobile, les systèmes de climatisation des véhicules commercialisés dans de nombreux pays sont passés d'un fluide frigorigène au chlorofluorocarbure (CFC-12) à celui de l'hydrofluorocarbure (1,1,1,2 tetrafluoroéthane : HFC-134a), moins nocif pour la couche d'ozone. Cependant, au regard des objectifs fixés par le protocole de Kyoto, le HFC-134a (GWP = 1300) est considéré comme ayant un pouvoir de réchauffement élevé. La contribution à l'effet de serre d'un fluide est quantifiée par un critère, le GWP (Global Warming Potentials) qui résume le pouvoir de réchauffement en prenant une valeur de référence de 1 pour le dioxyde de carbone.

Le dioxyde de carbone étant non-toxique, ininflammable et ayant un très faible GWP, a été proposé comme fluide frigorigène des systèmes de climatisation en remplacement du HFC-134a. Toutefois, l'emploi du dioxyde de carbone présente plusieurs inconvénients, notamment liés à la pression très élevée de sa mise en oeuvre en tant que fluide frigorigène dans les appareils et technologies existants.

Par ailleurs, le mélange R-404A constitué de 44 % en poids de pentafluoroéthane, 52 % en poids de trifluoroéthane et 4 % en poids de HFC-134a est largement utilisé comme fluide de réfrigération de grandes surfaces (supermarché) et dans les transports frigorifiques. Ce mélange a toutefois un GWP de 3900. Le mélange R-407C, constitué de 52 % en poids du HFC-134a, 25 % en poids du pentafluoroethane et 23 % en poids de difluoromethane, est utilisé comme fluide de transfert de chaleur dans l'air conditionné et les pompes à chaleur. Ce mélange a toutefois un GWP de 1800.

Le document JP 4110388 décrit l'utilisation des hydrofluoropropènes de formule C₃HₘFₙ, avec m, n représentant un nombre entier compris entre 1 et 5 inclus et m + n = 6, comme fluides de transfert de chaleur, en particulier le tetrafluoropropène et le trifluoropropène.

Le document WO2004/037913 divulgue l'utilisation des compositions comprenant au moins un fluoroalcène ayant trois ou quatre atomes de carbone, notamment le pentafluoropropène et le tetrafluoropropène, de préférence ayant un GWP au plus de 150, comme fluides de transfert de chaleur.

Le document WO 2005/105947 enseigne l'ajout au tetrafluoropropène, de préférence le 1,3,3,3 tetrafluoropropène, d'un co-agent d'expansion tels que le difluoromethane, le pentafluoroéthane, le tetrafluoroéthane, le difluoroéthane, l'heptafluoropropane, l'hexafluoropropane, le pentafluoropropane, le pentafluorobutane, l'eau et le dioxyde de carbone.

Le document WO 2006/094303 divulgue une composition azéotropique contenant 7,4 % en poids du 2,3,3,3 tetrafluoropropène (1234yf) et 92,6 % en poids du difluorométhane (HFC-32). Ce document divulgue également une composition azéotropique contenant 91 % en poids du 2,3,3,3 tetrafluoropropène et 9 % en poids du difluoroéthane (HFC-152a).

La demanderesse a maintenant mis au point des compositions renfermant des hydrofluoropropènes, utilisables comme fluide de transfert de chaleur, ne présentant pas les inconvénients précités et ayant à la fois un ODP nul et un GWP inférieur à celui des fluides de transfert de chaleur existants comme le R-404A La présente invention a plus particulièrement pour objet l'utilisation d'une composition consistant essentiellement en 60 à 90 % en poids de 2,3,3,3 tétrafluoropropène et 10 à 40 % en poids d'au moins un composé choisi parmi le difluoroéthane et le difluorométhane, en remplacement du R-404A dans au moins un étage d'un système de réfrigération avec une compression en cascade.

Selon un premier mode de réalisation de l'invention les compositions consistent essentiellement en 60 à 79 % en poids du 2,3,3,3 tetrafluoropropène et en 21 à 40 % en poids d'un composé choisi parmi le difluoroéthane et difluorométhane.

De préférence, les compositions selon ce premier mode de réalisation consistent essentiellement en 60 à 70 % en poids du 2,3,3,3 tetrafluoropropène et en 30 à 40 % en poids d'un composé choisi parmi le difluoroéthane et difluorométhane.

Avantageusement, les compositions selon ce premier mode consistent essentiellement en 60 à 65 % en poids du 2,3,3,3 tetrafluoropropène et en 35 à 40 % en poids d'un composé choisi parmi le difluoroéthane et le difluorométhane.

Les compositions particulièrement préférées selon ce premier mode de réalisation contiennent essentiellement du 2,3,3,3 tetrafluoropropène et du difluorométhane.

Selon un deuxième mode de réalisation de l'invention, les compositions consistent essentiellement en 60 à 90 % en poids du 2,3,3,3 tetrafluoropropène et en 10 à 40 % en poids d'un mélange constitué de difluorométhane et de difluoroéthane.

Les compositions préférées selon ce deuxième mode de réalisation consistent essentiellement en 60 à 80 % en poids de 2,3,3,3 tetrafluoropropène et en 20 à 40 % en poids d'un mélange constitué de difluorométhane et de difluoroéthane.

Les compositions avantageusement préférées selon ce deuxième mode consistent essentiellement en 60 à 75 % en poids de 2,3,3,3 tetrafluoropropène et en 25 à 40 % en poids d'un mélange constitué de difluorométhane et de difluoroéthane.

Des compositions particulièrement préférées consistent essentiellement en 60 à 80 % en poids de 2,3,3,3 tetrafluoropropène et en 5 à 35 % en poids de difluorométhane et en 5 à 35 % en poids de difluoroéthane.

Les compositions intéressantes sont celles contenant essentiellement de 60 à 80 % en poids de 2,3,3,3 tetrafluoropropène et de 10 à 30 % en poids de difluorométhane et de 10 à 30 % en poids de difluoroéthane.

Les compositions utilisées selon la présente invention peuvent comprendre un stabilisant du 2,3,3,3 tetrafluoropropène. Le stabilisant représente au plus 5 % en poids par rapport à la composition totale.

Comme stabilisants, on peut citer notamment le nitromethane, l'acide ascorbique, l'acide terephtalique, les azoles tels que le tolutriazole ou le benzotriazole, les composés phénoliques tels que le tocopherol, l'hydroquinone, le t-butyl hydroquinone, le 2,6-di-ter-butyl-4-methylphenol, les epoxydes (alkyl éventuellement fluoré ou perfluoré ou alkenyl ou aromatique) tels que les n-butyl glycidyl ether, hexanediol diglycidyl ether, allyl glycidyl ether, butylphenylglycidyl ether, les phosphites, les phosphates, les phosphonates, les thiols et lactones.

Les compositions utilisées selon la présente invention peuvent comprendre des lubrifiants tels que l'huile minérale, alkylbenzène, le polyalkylène glycol et le polyvinyl éther.

Les compositions particulièrement intéressantes pour le remplacement du R-404A dans des systèmes à compression en cascade, sont, par exemple, celles contenant essentiellement 60 % en poids du 2,3,3,3 tetrafluoropropène et 40 % en poids du difluoroéthane ; 70 % en poids du 2,3,3,3 tetrafluoropropène et 30 % en poids du difluoroéthane ; 75 % en poids du 2,3,3,3 tetrafluoropropène, 20 % en poids du difluorométhane et 5 % en poids du difluoroéthane.

### PARTIE EXPERIMENTALE

Les performances des compositions selon l'invention dans les conditions de fonctionnement de réfrigération sont données dans le Tableau 1. Les valeurs des constituants (1234yf, 32 et 152a) pour chaque composition sont données en pourcentage en poids.

Pour le R404A la pression nominale de fonctionnement est de 18 bar, la capacité volumétrique est de 1500 kJ/m³ et le COP est de 1,8 dans les conditions de fonctionnement suivantes :

| | |
|---|---|
| Température d'évaporation : | -20°C |
| Température de condensation : | 40°C |
| Température entrée compresseur : | -5°C |
| Température du liquide sous refroidi : | 33°C |
| Rendement isentropique du compresseur : | 70 % |
| BP : pression à l'évaporateur | |
| HP : pression au condenseur | |
| Taux : le taux de compression | |
| T sortie comp : température à la sortie compresseur | |
| COP : coefficient de performance et est défini, lorsqu'il s'agit de la réfrigération comme étant la puissance froide utile fournie par le système sur la puissance apportée ou consommée par le système. | |
| CAP : capacité volumétrique (kJ/m³) | |
| % CAP ou COP c'est le rapport de la valeur du CAP ou COP du mélange par rapport à la meme valeur pour le R404A. | |

**Tableau 1**

| **Compositions** | | | **BP (bar)** | **HP (bar)** | **Taux (p/p)** | **T sortie comp** | **% COP** | **%CAP** |
|---|---|---|---|---|---|---|---|---|
| **R404A** | | | 3 | 18 | 6,10 | 77 | 100 | 100 |
| **1234yf** | **32** | **152a** | | | | | | |
| **60** | **40** | **0** | 2,7 | 21 | 7,57 | 111 | 96 | 102 |
| **70** | **30** | **0** | 2,4 | 19 | 8,02 | 104 | 94 | 89 |
| 75 | 25 | 0 | 2,2 | 18 | 8,19 | 101 | 94 | 83 |
| | | | | | | | | |
| **1234yf** | **32** | **152a** | | | | | | |
| 60 | 20 | 20 | **2,0** | **16** | 8,01 | 100 | **98** | **76** |
| 60 | 30 | 10 | **2,3** | **18** | 7,94 | 106 | **96** | **88** |
| 70 | 25 | 5 | 2,2 | 18 | 8,10 | 101 | 95 | 83 |
| 70 | 20 | 10 | 2,0 | 16 | 8,07 | 98 | 96 | 77 |
| 75 | 20 | 5 | **2,0** | **16** | 8,16 | 97 | **95** | **77** |
| 75 | 15 | 10 | **1,9** | **15** | 8,01 | 93 | **97** | **72** |
| 85 | 10 | 5 | **1,8** | **14** | 7,92 | 86 | **99** | **67** |
| | | | | | | | | |
| **1234yf** | **32** | **152a** | | | | | | |
| **60** | **0** | **40** | 1,5 | 10 | 6,60 | 79 | 114 | 59 |
| 70 | 0 | 30 | 1,5 | 10 | 6,53 | 76 | 113 | 59 |

## Revendications

1. Utilisation d'une composition consistant essentiellement en 60 à 90 % en poids de 2,3,3,3 tétrafluoropropène et 10 à 40 % en poids d'au moins un composé choisi parmi le difluoroéthane et le difluorométhane, en remplacement du R-404A dans au moins un étage d'un système de réfrigération avec une compression en cascade.

2. Utilisation selon la revendication 1 **caractérisée en ce que** la composition consiste essentiellement en 60 à 79 % en poids du 2,3,3,3 tétrafluoropropène et 21 à 40 % en poids d'un composé choisi parmi le difluoroéthane et difluorométhane.

3. Utilisation selon l'une quelconque des revendications 1 à 2, **caractérisée en ce que** la composition consiste essentiellement en 60 à 70 % en poids du 2,3,3,3 tétrafluoropropène et 30 à 40 % en poids d'un composé choisi parmi le difluoroéthane et difluorométhane.

4. Utilisation selon la revendication 1, **caractérisée en ce que** la composition consiste essentiellement en 60 à 80 % en poids de 2,3,3,3 tétrafluoropropène et 20 à 40 % en poids d'un mélange constitué de difluorométhane et difluoroéthane.

5. Utilisation selon la revendication 1, **caractérisée en ce que** la composition consiste essentiellement en 60 à 80 % en poids de 2,3,3,3 tétrafluoropropène et 5 à 35 % en poids de difluorométhane et 5 à 35 % en poids de difluoroéthane.

6. Utilisation selon la revendication 1 ou 5, **caractérisée en ce que** la composition consiste essentiellement en 60 à 80 % en poids de 2,3,3,3-tétrafluoropropène et 10 à 30 % en poids de difluorométhane et 10 à 30 % en poids de difluoroéthane.

## Patentansprüche

1. Verwendung einer Zusammensetzung, die im Wesentlichen aus 60 bis 90 Gew.-% 2,3,3,3-Tetrafluorpropen und 10 bis 40 Gew.-% mindestens einer Verbindung, die aus Difluorethan und Difluormethan ausgewählt ist, besteht, als Ersatz für R-404A in mindestens einer Stufe eines Kälteerzeugungssystems mit Kaskadenverdichtung.

2. Verwendung nach Anspruch 1, **dadurch gekennzeichnet, dass** die Zusammensetzung im Wesentlichen aus 60 bis 79 Gew.-% 2,3,3,3-Tetrafluorpropen und 21 bis 40 Gew.-% einer Verbindung, die aus Difluorethan und Difluormethan ausgewählt ist, besteht.

3. Verwendung nach einem der Ansprüche 1 bis 2, **dadurch gekennzeichnet, dass** die Zusammensetzung im Wesentlichen aus 60 bis 70 Gew.-% 2,3,3,3-Tetrafluorpropen und 30 bis 40 Gew.-% einer Verbindung, die aus Difluorethan und Difluormethan ausgewählt ist, besteht.

4. Verwendung nach Anspruch 1, **dadurch gekennzeichnet, dass** die Zusammensetzung im Wesentlichen aus 60 bis 80 Gew.-% 2,3,3,3-Tetrafluorpropen und 20 bis 40 Gew.-% eines Gemischs aus Difluormethan und Difluorethan besteht.

5. Verwendung nach Anspruch 1, **dadurch gekennzeichnet, dass** die Zusammensetzung im Wesentlichen aus 60 bis 80 Gew.-% 2,3,3,3-Tetrafluorpropen und 5 bis 35 Gew.-% Difluormethan und 5 bis 35 Gew.-% Difluorethan besteht.

6. Verwendung nach Anspruch 1 oder 5, **dadurch gekennzeichnet, dass** die Zusammensetzung im Wesentlichen aus 60 bis 80 Gew.-% 2,3,3,3-Tetrafluorpropen und 10 bis 30 Gew.-% Difluormethan und 10 bis 30 Gew.-% Difluorethan besteht.

## Claims

1. Use of a composition consisting essentially of 60% to 90% by weight of 2,3,3,3-tetrafluoropropene and 10% to 40% by weight of at least one compound selected from difluoroethane and difluoromethane, for replacing R-404A in at least one stage of a refrigeration system with a cascaded compression regime.

2. Use according to Claim 1, **characterized in that** the composition consists essentially of 60% to 79% by weight of 2,3,3,3-tetrafluoropropene and 21% to 40% by weight of a compound selected from difluoroethane and difluoromethane.

3. Use according to either of Claims 1 and 2, **characterized in that** the composition consists essentially of 60% to 70% by weight of 2,3,3,3-tetrafluoropropene and 30% to 40% by weight of a compound selected from difluoroethane and difluoromethane.

4. Use according to Claim 1, **characterized in that** the composition consists essentially of 60% to 80% by weight of 2,3,3,3-tetrafluoropropene and 20% to 40% by weight of a mixture composed of difluoromethane and difluoroethane.

5. Use according to Claim 1, **characterized in that** the composition consists essentially of 60% to 80% by weight of 2,3,3,3-tetrafluoropropene and 5% to 35% by weight of difluoromethane and 5% to 35% by weight of difluoroethane.

6. Use according to Claim 1 or 5, **characterized in that** the composition consists essentially of 60% to 80% by weight of 2,3,3,3-tetrafluoropropene and 10% to 30% by weight of difluoromethane and 10% to 30% by weight of difluoroethane.
